# EUROPEAN PATENT APPLICATION

(11) **EP 4 684 938 A1**
(43) Date of publication of application: **28.01.2026**
(21) Application number: 23928766.7
(22) Date of filing: 16.11.2023
(51) Int. Cl.: B29C 48/92, B29C 48/08, B29C 48/88

(54) **AIR NOZZLE POSITION CONTROL DEVICE, AIR NOZZLE POSITION CONTROL METHOD, AND RESIN MOLDING SYSTEM**

(30) Priority: 23.03.2023 JP 2023046793
(71) Applicant: The Japan Steel Works, Ltd., Tokyo 141-0032 (JP)
(72) Inventor: TASHIRO, Kentaro, Tokyo 141-0032 (JP); UCHIUMI, Shinichi, Tokyo 141-0032 (JP); AGOU, Kazuhiro, Tokyo 141-0032 (JP)
(74) Representative: Simmons & Simmons LLP (Munich)
(86) International application number: PCT/JP2023/041315
(87) International publication number: WO 2024/195197

(57) **Abstract**

The present invention stably sets a proper operating condition of a resin molding system without depending on the skill of a user. Provided is an air nozzle position control device comprising: an air nozzle movement control unit; an air nozzle position information storage unit; and an air nozzle position information processing unit. The air nozzle movement control unit controls at least one of the position and posture of an air nozzle in a cooling device included in the resin molding system by controlling a moving device that changes the position and posture of the air nozzle. The air nozzle position information processing unit executes: a process for storing, in the air nozzle position information storage unit, air nozzle position information indicating the position and posture of the air nozzle; and a process for reading the air nozzle position information stored in the air nozzle position information storage unit in response to an input signal, and transmitting such information to the air nozzle movement control unit.

## Description

### TECHNICAL FIELD

The present invention relates to an air nozzle position control device, an air nozzle position control method, and a resin molding system.

### BACKGROUND ART

Resin molding systems have been known. A resin molding system includes, for example, a cooling apparatus provided with an air nozzle, and is configured to melt and knead a resin raw material and cool a molten resin in the cooling apparatus to mold it into a film shape. Patent Document 1 discloses a technique related to a resin molding system.

### RELATED ART DOCUMENTS

### PATENT DOCUMENTS

Patent Document 1: Japanese Unexamined Patent Application Publication No. 2007-203508

### SUMMARY OF THE INVENTION

### PROBLEMS TO BE SOLVED BY THE INVENTION

In manufacturing resin films or the like using a resin molding system, the user, based on his/her own experience and intuition, performs initial setting of the operating conditions of the system, visually checks the state of the resin after the system is started to operate, and adjusts the operating conditions such that the resin is in an appropriate state.

However, adjusting the operating conditions of a resin molding system is very severe, and even slight differences in conditions often result in a large difference in the state or characteristics of the resin film to be manufactured. Therefore, the operating conditions cannot be properly adjusted depending on the user's skill level, resulting in the occurrence of variations in product quality in some cases.

Due to the above circumstances, there is a demand for the technique capable of more stably setting appropriate operating conditions for resin molding system.

### MEANS FOR SOLVING THE PROBLEMS

One embodiment is an air nozzle position control device. The air nozzle position control device includes an air nozzle movement control unit, an air nozzle position information storage unit, and an air nozzle position information processing unit. The air nozzle movement control unit controls at least one of a position and an orientation of an air nozzle included in a cooling apparatus in a resin molding system by controlling a movement device configured to change the position and the orientation of the air nozzle based on an air nozzle movement control signal or position information indicating the position and the orientation of the air nozzle. The air nozzle position information processing unit performs a process to store the air nozzle position information at a current time in the air nozzle position information storage unit, a process to read out the position information stored in the air nozzle position information storage unit based on a read command signal, and a process to transmit the read position information to the air nozzle movement control unit.

One embodiment is an air nozzle position control method. The air nozzle control method includes a step of controlling at least one of a position and an orientation of an air nozzle by an air nozzle movement control unit controlling a movement device configured to change the position and the orientation of the air nozzle based on an air nozzle movement control signal or position information indicating the position and the orientation of the air nozzle, a step of storing the air nozzle position information at a current time in an air nozzle position information storage unit by an air nozzle position information processing unit, and a step of reading out the position information stored in the air nozzle position information storage unit based on a read command signal and transmitting the position information to the air nozzle movement control unit by the air nozzle position information processing unit.

One embodiment is a resin molding system. The resin molding system includes the air nozzle position control device.

### EFFECTS OF THE INVENTION

According to one embodiment, it is possible to set the appropriate operating conditions for the resin molding system more stably.

### BRIEF DESCRIPTION OF THE DRAWINGS

[FIG. 1] is a diagram illustrating a configuration example of a resin molding system according to the first embodiment.
[FIG. 2] is a diagram illustrating a configuration example of a system computer according to the first embodiment.
[FIG. 3] is a diagram illustrating an example of functional blocks configured by the system computer according to the first embodiment.
[FIG. 4] is a diagram illustrating a configuration example of a cooling apparatus according to the first embodiment.
[FIG. 5] is a diagram illustrating a configuration example of a cooling apparatus computer according to the first embodiment.
[FIG. 6] is a diagram illustrating an example of functional blocks configured by the cooling apparatus computer according to the first embodiment.
[FIG. 7] is a diagram illustrating a configuration example of functional blocks in an air nozzle control unit according to the first embodiment.
[FIG. 8] is a process flow diagram illustrating an example of a process flow in the air nozzle control unit according to the first embodiment.
[FIG. 9] is a diagram illustrating a configuration example of a main part of a cooling apparatus according to a first modification of the first embodiment.
[FIG. 10] is a table illustrating an example of information stored in an air nozzle position information storage unit according to the first modification of the first embodiment.
[FIG. 11] is a diagram illustrating an example of a connection configuration of a plurality of resin molding systems and a server according to a second modification of the first embodiment.
[FIG. 12] is a diagram illustrating an example of a connection configuration of a plurality of resin molding systems according to a third modification of the first embodiment.
[FIG. 13] is a diagram illustrating an example of a plurality of resin molding systems and a storage medium according to a fourth modification of the first embodiment.
[FIG. 14] is a diagram illustrating a configuration example of a main part of a cooling apparatus according to a fifth modification of the first embodiment.
[FIG. 15] is a process flow diagram illustrating an example of a process flow in an air nozzle control unit according to the fifth modification of the first embodiment.
[FIG. 16] is a diagram illustrating a configuration example of a main part of a cooling apparatus according to a sixth modification of the first embodiment.
[FIG. 17] is a process flow diagram illustrating an example of a process flow in an air nozzle control unit according to the sixth modification of the first embodiment.
[FIG. 18] is a diagram illustrating a configuration example of a main part of a cooling apparatus according to a seventh modification of the first embodiment.
[FIG. 19] is a process flow diagram illustrating an example of a process flow in an air nozzle control unit according to the seventh modification of the first embodiment.

### DETAILED DESCRIPTION OF PREFERRED EMBODIMENTS

### <Background of study by inventors>

In general, a resin molding system used for manufacturing resin films or the like includes an extrusion apparatus configured to melt and knead an input resin raw material and extrude it into a T-die and a cooling apparatus configured to cool the film-shaped molten resin discharged from a slit-shaped discharge port provided in the T-die to mold it into a film. In addition, the cooling apparatus includes a casting roll and an air nozzle. Note that the casting roll is referred to also as a cooling roll, and the air nozzle is referred to also as an air knife. The casting roll is disposed below the discharge port of the T-die and is configured to rotate around a horizontal rotation axis. The air nozzle has an elongated opening that extends in a direction parallel to the rotation axis of the casting roll, and blows out a curtain-shaped wind from the opening.

The film-shaped molten resin discharged from the T-die comes into contact with the surface of the rotating casting roll. In addition, a curtain-shaped wind is blown from the air nozzle onto the molten resin that comes into contact with the surface of the casting roll. The molten resin is cooled by coming into contact with the surface of the casting roll and being exposed to the air from the air nozzle.

It is known that the state or characteristics of the molded resin greatly vary depending on the relationship among the position of the discharge port of the T-die, the position of the surface of the casting roll, and the position and the orientation of the air nozzle. In many cases, it is difficult to finely adjust the positions of the T-die and casting roll due to their structure. Therefore, in order to mold resin in the desired state, it is very important to adjust the position and the orientation of the air nozzle relative to the T-die or casting roll (hereinafter simply referred to as alignment).

Aligning the air nozzle is extremely severe. Even a minute change in the position of the air nozzle, for example a change of about 0.5 mm, can have a significant influence on the quality or characteristics of the resin film to be molded. For this reason, conventionally, aligning the air nozzle has often been performed by an experienced person manually operating a movement mechanism of the air nozzle based on his/her experience and intuition.

Meanwhile, even after the air nozzle has been aligned, there may be occasions when the air nozzle needs to be moved to a different position or retracted. For example, when performing maintenance on the resin molding system or cooling apparatus or when switching the type of product to be manufactured, it is necessary to move the air nozzle to a position different from the previous one.

However, if an experienced person is not present when realigning the air nozzle, aligning the air nozzle may become time-consuming. Also, even if the air nozzle alignment is thought to be complete, the quality or characteristics of the product may differ from what was expected when the product is actually inspected.

Due to the above circumstances, there is a demand for the technique capable of more stably setting the position and the orientation of the air nozzle, which are the conditions for appropriate operation of the resin molding system.

The inventors of this application have found out the above technique as a result of extensive studies. An embodiment which is one example of the technique will be described below.

### (First embodiment)

### <Configuration example of resin molding system>

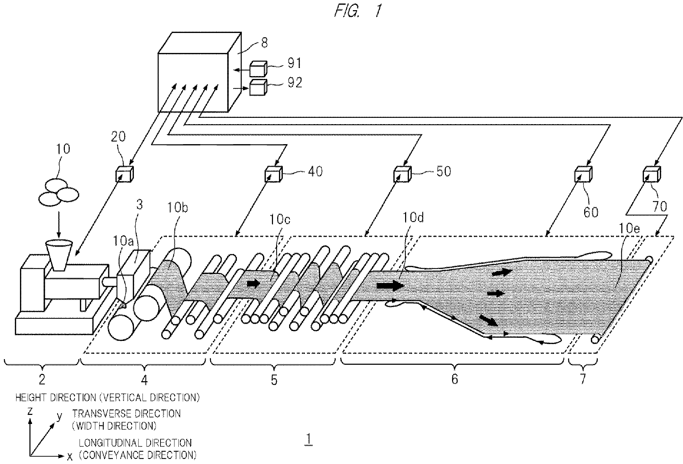

FIG. 1 is a diagram illustrating a configuration example of a resin molding system according to the first embodiment. As illustrated in FIG. 1, a resin molding system 1 includes an extrusion apparatus 2, a T-die 3, a cooling apparatus 4, a longitudinal stretching apparatus 5, a transverse stretching apparatus 6, and a winding apparatus 7.

The extrusion apparatus 2 melts and kneads a raw material 10 and pushes the molten resin into the T-die 3. The T-die 3 molds and discharges the molten resin pushed in from the extrusion apparatus 2 into a film-shaped resin 10a through a slit-shaped discharge port. The cooling apparatus 4 cools the film-shaped resin 10a discharged from the T-die 3 to mold it into a film-like resin 10b and conveys it to a downstream side. The longitudinal stretching apparatus 5 stretches a film-like resin 10c conveyed from the cooling apparatus 4 in the longitudinal direction, which is the conveyance direction of the resin film, and conveys it to the downstream side. The transverse stretching apparatus 6 stretches a film-like resin 10d conveyed from the longitudinal stretching apparatus 5 in the transverse direction, which is the width direction of the resin film, and conveys it to the downstream side. The winding apparatus 7 winds up a film-like resin 10e conveyed from the transverse stretching apparatus 6.

Note that the above configuration of the resin molding system is merely one example. For example, the positions of the longitudinal stretching apparatus 5 and the transverse stretching apparatus 6 may be exchanged, or one or both of them may be omitted.

The resin molding system 1 further includes an extrusion apparatus computer 20, a cooling apparatus computer 40, a longitudinal stretching apparatus computer 50, a transverse stretching apparatus computer 60, a winding apparatus computer 70, and a system computer 8. The system computer 8 is connected to the extrusion apparatus computer 20, the cooling apparatus computer 40, the longitudinal stretching apparatus computer 50, the transverse stretching apparatus computer 60, and the winding apparatus computer 70. The system computer 8 communicates with and controls each of the computers from the extrusion apparatus computer 20 to the winding apparatus computer 70.

The system computer 8 includes a system operation unit 91 and a system display unit 92. The system computer 8 receives input in response to the operation of the system operation unit 91 by a user, and displays various types of information on the system display unit 92. The system operation unit 91 is composed of, for example, a keyboard or a mouse. The system display unit 92 is composed of, for example, a liquid crystal monitor. The system operation unit 91 and the system display unit 92 may be an integrated touch panel display or the like.

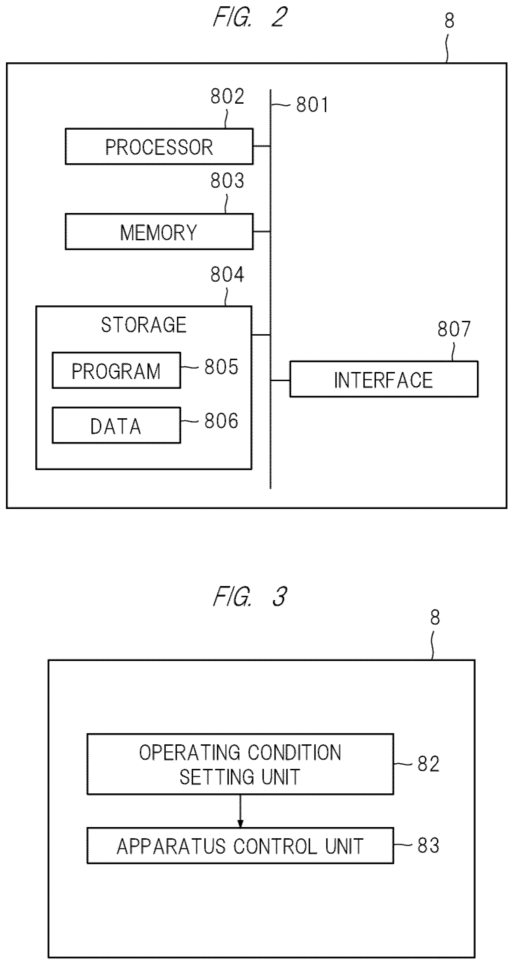

FIG. 2 is a diagram illustrating a configuration example of the system computer 8 according to the first embodiment. As illustrated in FIG. 2, the system computer 8 includes, for example, a communication bus 801, a processor 802, a memory 803, a storage 804, and an interface 807 as components. The processor 802, the memory 803, the storage 804, and the interface 807 are connected to each other via the communication bus 801 and can communicate with each other. The storage 804 stores a program 805 and data 806. The processor 802 reads out the program 805 stored in the storage 804, expands it in the memory 803, and executes it using the data 806 as necessary, thereby functioning as various functional blocks.

Note that examples of the processor 802 include a CPU (Central Processing Unit), an MPU (Micro Processor Unit), an MCU (Micro Controller Unit), and a PLD (Programmable Logic Device). The memory 803 is, for example, a semiconductor storage device. Examples of the storage 804 include an SSD (Solid State Drive) and an HDD (Hard Disk Drive). The program 805 and the data 806 may be stored in the memory 803.

FIG. 3 is a diagram illustrating an example of functional blocks configured by the system computer 8 according to the first embodiment. In the first embodiment, as illustrated in FIG. 3, the system computer 8 functions as an operating condition setting unit 82 and an apparatus control unit 83, which are functional blocks. The operating condition setting unit 82 sets the operating conditions of each apparatus based on information or the like input by the user operating the system operation unit 91. The apparatus control unit 83 controls the operation of each apparatus by transmitting a control signal to each apparatus computer based on the set operating conditions.

### <Configuration example of cooling apparatus>

Here, a configuration example of the cooling apparatus 4 will be described.

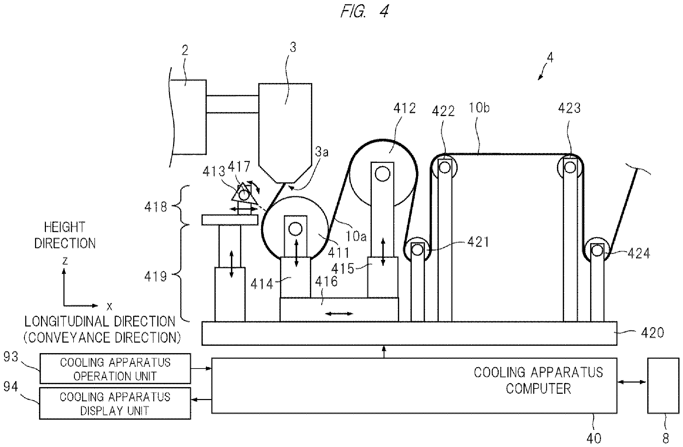

FIG. 4 is a diagram illustrating a configuration example of the cooling apparatus according to the first embodiment. As illustrated in FIG. 4, the cooling apparatus 4 includes a first casting roll 411, a second casting roll 412, an air nozzle 413, and conveying rolls 421 to 424. The first casting roll 411 is disposed below a discharge port 3a of the T-die 3. The second casting roll 412 is often disposed above and on a downstream side of the first casting roll 411. The air nozzle 413 is disposed near the discharge port 3a of the T-die 3 and the first casting roll 411. The conveying rolls 421 to 424 are disposed in order from the second casting roll 412 toward the downstream side.

The first casting roll 411 and the second casting roll 412 are controlled such that the roll surface temperature is maintained at a temperature lower than the temperature of the molten resin and they rotate at a set rotation speed. The air nozzle 413 pushes out compressed air introduced inside from an elongated air outlet and blows out a curtain-shaped wind toward the roll surface of the first casting roll 411. The molten resin discharged from the discharge port 3a of the T-die 3 falls by gravity and comes into contact with the roll surface of the first casting roll 411. The wind blown out from the air nozzle 413 hits the molten resin that is in contact with the roll surface of the first casting roll 411. The molten resin is cooled and cured by the roll surface of the first casting roll 411 and the wind blown out from the air nozzle 413, and is molded into a film shape.

The first casting roll 411 conveys the resin molded into a film shape to the second casting roll 412 by its own rotation. The second casting roll 412 further cools and solidifies the resin 10a conveyed from the first casting roll 411 on the roll surface. The second casting roll 412 conveys the solidified resin 10b to the conveying roll 421 by its own rotation. The conveying rolls 421 to 424 convey the resin 10b to the longitudinal stretching apparatus 5 installed on the further downstream side.

Incidentally, as mentioned above, it is known that the state or characteristics of the molded resin greatly vary depending on the positional relationship among the discharge port 3a of the T-die 3, the first casting roll 411, and the air nozzle 413, the direction of the air blown from the air nozzle 413, and the like. For this reason, the first casting roll 411, the second casting roll 412, and the air nozzle 413 are configured such that their positions and the orientation of the air nozzle 413, that is, the air blowing direction can be changed. In this embodiment, as an example, the cooling apparatus 4 has the configuration described below.

The cooling apparatus 4 includes a first casting roll lifting device 414, a second casting roll lifting device 415, a casting roll horizontal movement device 416, an air nozzle rotating device 417, an air nozzle horizontal movement device 418, an air nozzle lifting device 419, and a support base 420. In this embodiment, two casting rolls are provided on the upstream side and the downstream side, but there may be only one casting roll.

The first casting roll 411 is provided with the first casting roll lifting device 414, and the second casting roll 412 is provided with the second casting roll lifting device 415. The first casting roll lifting device 414 and the second casting roll lifting device 415 are supported by the casting roll horizontal movement device 416. The casting roll horizontal movement device 416 is supported by the support base 420. The first casting roll 411 and the second casting roll 412 can change their height position and horizontal position relative to the support base 420 by these lifting devices and horizontal movement device.

The air nozzle 413 is provided with the air nozzle rotating device 417. The air nozzle rotating device 417 is supported by the air nozzle horizontal movement device 418. The air nozzle horizontal movement device 418 is supported by the air nozzle lifting device 419. In addition, the air nozzle lifting device 419 is supported by the support base 420. The air nozzle rotating device 417, the air nozzle horizontal movement device 418, and the air nozzle lifting device 419 are examples of the movement device disclosed in this application.

The air nozzle rotating device 417 has a rotation mechanism that supports the air nozzle 413 and rotates the air nozzle 413 around a rotation axis that is parallel to the longitudinal direction of the air nozzle 413, that is, the width direction of the resin, and can change the rotation angle position, that is, the orientation of the air nozzle 413. By changing the orientation of the air nozzle 413, the direction of the air blown from the air nozzle 413 can be changed.

The air nozzle horizontal movement device 418 has a horizontal movement mechanism that supports the air nozzle rotating device 417 and moves the air nozzle rotating device 417 in the horizontal direction perpendicular to the longitudinal direction of the air nozzle 413, and can change the position of the air nozzle rotating device 417 in the horizontal direction.

The air nozzle lifting device 419 has a lifting mechanism that supports the air nozzle horizontal movement device 418 and raises and lowers the air nozzle horizontal movement device 418 in the vertical direction, and can change the position of the air nozzle horizontal movement device 418 in the height direction.

The air nozzle 413 can change its height position, horizontal position, and rotation angle position relative to the support base 420 by using the air nozzle rotating device 417, the air nozzle horizontal movement device 418, and the air nozzle lifting device 419.

Adjusting the position and the orientation of the air nozzle 413 is said to be extremely difficult and severe because it has a significant influence on the quality of the resin film to be manufactured, and generally, an experienced person adjusts the position and the orientation of the air nozzle 413 in many cases.

On the other hand, even when the position and the orientation of the air nozzle 413 have once been adjusted, there are cases where it is necessary to change the position and the orientation of the air nozzle 413 thereafter. For example, when performing maintenance on the cooling apparatus 4 or when switching the type of resin film to be manufactured, the position and the orientation of the air nozzle 413 are changed to move it away from the T-die 3 or the first casting roll 411 in some cases.

In such cases, conventionally, after maintenance or when returning to the original type of product to be manufactured, an experienced person would readjust the position and the orientation of the air nozzle 413.

However, even an experienced person needs a relatively long time to adjust the position of the air nozzle 413. Furthermore, if an experienced person is not present, it may take even longer to adjust the position of the air nozzle 413, or it may not be possible to bring the state or characteristics of the resin to be manufactured to the intended state or characteristics, resulting in unstable quality.

In this embodiment, therefore, electric actuators using a motor as a drive source are used for the movement devices including the rotating device, the horizontal movement device, and the lifting device described above. Examples of the motor include an AC servo motor and a stepping motor. Air may be used as an auxiliary aid of the electric actuator. The electric actuator may be a commercially available product, or may be manufactured by combining a motor and a movement mechanism. In other words, the rotating device may be a combination of a motor and a rotation mechanism, the horizontal movement device may be a combination of a motor and a horizontal movement mechanism, and the lifting device may be a combination of a motor and a lifting mechanism.

When such an electric actuator is used in the above-mentioned movement devices, air nozzle position information indicating the position and the orientation of the air nozzle 413 can be expressed as a rotation angle position, horizontal position, and height position relative to a reference position of a movable part of the electric actuator. Also, the air nozzle position information can be expressed as data corresponding to an extension amount, movement amount, and rotation angle amount of the movable part of the electric actuator or data corresponding to the number of rotations or amount of rotation of a motor shaft, linear scale information, and others.

Further, the cooling apparatus computer 40 is provided with a function of performing a process to store the air nozzle position information indicating the position and the orientation of the air nozzle 413 and a process to read out the air nozzle position information. After maintenance or when returning to the original type of resin film to be manufactured, the user can make the cooling apparatus computer 40 read out the stored air nozzle position information and reset the position and the orientation of the air nozzle 413 based on the air nozzle position information.

Next, a configuration example of the cooling apparatus computer will be described.

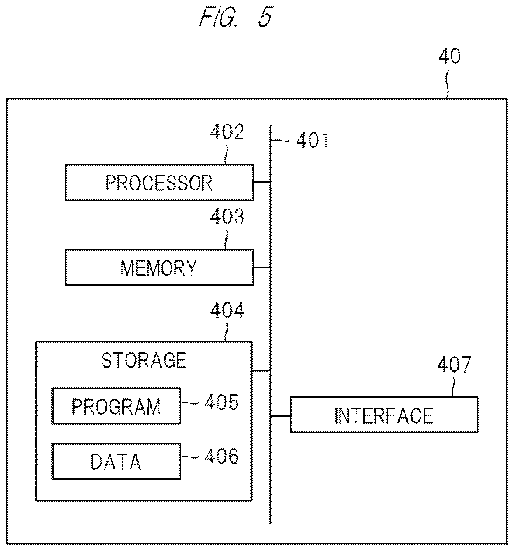

FIG. 5 is a diagram illustrating a configuration example of the cooling apparatus computer 40 according to the first embodiment. As illustrated in FIG. 5, the cooling apparatus computer 40 includes, for example, a communication bus 401, a processor 402, a memory 403, a storage 404, and an interface 407 as components. The processor 402, the memory 403, the storage 404, and the interface 407 are connected to each other via the communication bus 401 and can communicate with each other. The storage 404 stores a program 405 and data 406. The processor 402 reads out the program 405 stored in the storage 404, expands it in the memory 403, and executes the program 405 using the data 406 as necessary, thereby functioning as various functional blocks.

Note that the processor 402 is, for example, a CPU, an MPU, an MCU, or a PLD like the processor 802. The memory 403 is, for example, a semiconductor storage device. The storage 404 is, for example, an SSD or an HDD. The program 405 and the data 406 may be stored in the memory 403.

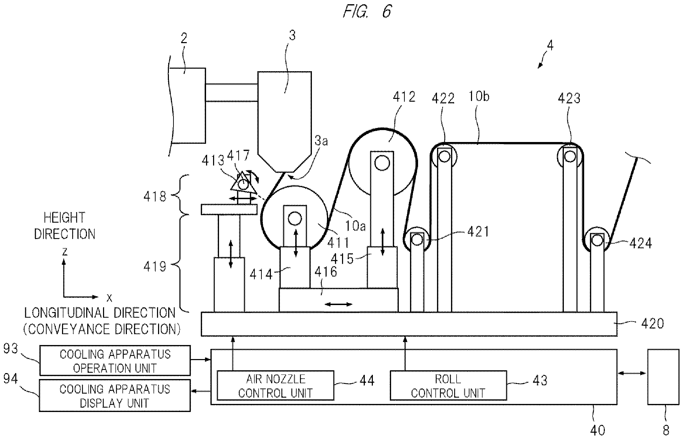

FIG. 6 is a diagram illustrating an example of functional blocks configured by the cooling apparatus computer 40 according to the first embodiment. In the first embodiment, as illustrated in FIG. 6, the cooling apparatus computer 40 functions as a roll control unit 43 and an air nozzle control unit 44 which are functional blocks.

The roll control unit 43 sets the position, rotation speed, or the like of the first casting roll 411 and the second casting roll 412 based on information input by the user operating a cooling apparatus operation unit 93 or information input from the apparatus control unit 83.

The air nozzle control unit 44 controls the movement device that changes the position and the orientation of the air nozzle 413 based on a movement control signal of the air nozzle 413 included in the cooling apparatus 4 in the resin molding system 1 or position information indicating the position and the orientation of the air nozzle 413. The air nozzle control unit 44 controls at least one of the position and the orientation of the air nozzle 413 by controlling the movement device.

The air nozzle control unit 44 controls the position and the orientation of the air nozzle 413 based on, for example, information input by the user operating the cooling apparatus operation unit 93 or position information of the air nozzle 413 input from the apparatus control unit 83. In addition, the air nozzle control unit 44 acquires position information of the air nozzle 413 in response to the user operating the cooling apparatus operation unit 93 and stores the information in the air nozzle position information storage unit, or reads out the stored air nozzle position information and controls the position and the orientation of the air nozzle 413 based on the air nozzle position information. Furthermore, the air nozzle control unit 44 controls the start and stop of the operation of the air nozzle 413.

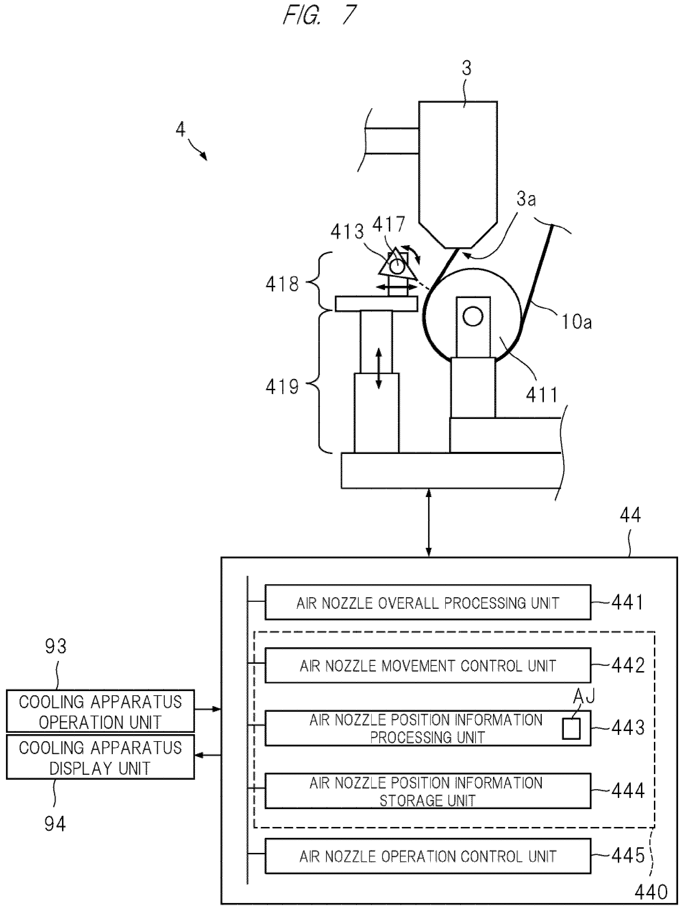

FIG. 7 is a diagram illustrating a configuration example of functional blocks in the air nozzle control unit 44 according to the first embodiment. In this embodiment, the air nozzle control unit 44 includes an air nozzle overall processing unit 441, an air nozzle movement control unit 442, an air nozzle position information processing unit 443, an air nozzle position information storage unit 444, and an air nozzle operation control unit 445.

The air nozzle overall processing unit 441 performs various processes related to the air nozzle. When the air nozzle overall processing unit 441 receives a control signal sent from the system computer 8 or the cooling apparatus operation unit 93, it transmits the control signal to each of the other units of the air nozzle control unit 44 as appropriate. Examples of the control signal include an air nozzle position information storage command signal, an air nozzle position information read command signal, an air nozzle movement control start signal, an air nozzle movement control signal, an air nozzle operation start signal, and an air nozzle operation stop signal.

The air nozzle position information storage command signal is a signal that commands the storage of air nozzle position information AJ. The air nozzle position information read command signal is a signal that commands the reading of air nozzle position information AJ. The air nozzle movement control start signal is a signal that commands the start of control to move the air nozzle to the position indicated by the set air nozzle position information AJ. The air nozzle movement control signal is a signal that commands the movement of the air nozzle by a certain amount in an input direction such as the height direction, horizontal direction, or rotation direction. The air nozzle operation start signal is a signal that commands the start of air blowing through the air nozzle. The air nozzle operation stop signal is a signal that commands the stop of air blowing through the air nozzle.

When the air nozzle movement control unit 442 receives the air nozzle movement control start signal, it controls the movement device of the air nozzle such that the position and the orientation of the air nozzle 413 become the position and the orientation indicated by the set air nozzle position information AJ. The movement device to be controlled is at least one of the air nozzle rotating device 417, the air nozzle horizontal movement device 418, and the air nozzle lifting device 419. Furthermore, when the air nozzle movement control unit 442 receives the air nozzle movement control signal, it controls at least one of the air nozzle rotating device 417, the air nozzle horizontal movement device 418, and the air nozzle lifting device 419 such that the air nozzle 413 moves into the orientation indicated by the input information.

The air nozzle position information processing unit 443 performs a process to store the air nozzle position information AJ at the current time in the air nozzle position information storage unit 444, and a process to read out the air nozzle position information AJ stored in the air nozzle position information storage unit 444 based on the read command signal and transmit the read air nozzle position information AJ to the air nozzle movement control unit 442.

For example, when the air nozzle position information processing unit 443 receives the air nozzle position information storage command signal, it acquires or generates the air nozzle position information AJ indicating the position and the orientation of the air nozzle 413 at the current time and stores it in the air nozzle position information storage unit 444. Furthermore, when the air nozzle position information processing unit 443 receives the air nozzle position information read command signal, it reads out the specific air nozzle position information AJ determined by the air nozzle position information read command signal from the air nozzle position information AJ stored in the air nozzle position information storage unit 444. Then, the air nozzle position information processing unit 443 transmits the read air nozzle position information AJ to the air nozzle movement control unit 442.

The air nozzle position information storage unit 444 stores the air nozzle position information. Note that the air nozzle position information AJ may be stored in association with various types of other information. For example, the air nozzle position information AJ may be stored in association with product type information indicating the type of resin film to be manufactured, date and time information indicating the date and time of storage, and others.

When the air nozzle operation control unit 445 receives the air nozzle operation start command signal, it starts air blowing from the air nozzle 413. In addition, when the air nozzle operation control unit 445 receives the air nozzle operation stop command signal, it stops the air blowing from the air nozzle 413.

### <Air nozzle position control device>

An air nozzle position control device 440 according to the first embodiment is a device that includes the air nozzle movement control unit 442, the air nozzle position information processing unit 443, and the air nozzle position information storage unit 444 as components. The air nozzle position control device 440 is an example of the air nozzle position control device disclosed in this application.

Note that the air nozzle position control device 440 can be said to be a device that includes a processor and memory and is configured such that the processor executes a program, thereby performing each process performed by the air nozzle movement control unit 442 and the air nozzle position information processing unit 443.

In addition, the air nozzle position control device that includes a processor and memory and is configured such that the processor executes a program to control a movement device that changes the position and the orientation of the air nozzle based on a control signal, thereby performing a step of performing movement control of the position and the orientation of the air nozzle, a step of storing the air nozzle position information indicating the position and the orientation of the air nozzle in the memory, and a step of reading out the air nozzle position information stored in the memory in response to an input signal is also one embodiment disclosed in this application.

### <Process flow related to position control of air nozzle control unit>

The process flow related to the position control in the process of the air nozzle control unit will be described.

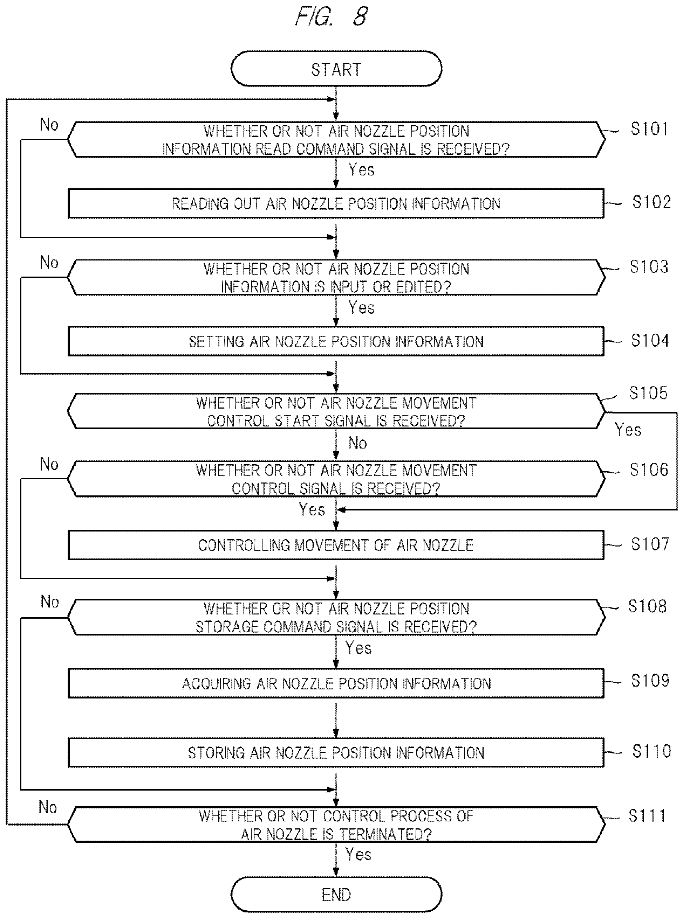

FIG. 8 is a process flow diagram illustrating an example of a process flow in the air nozzle control unit according to the first embodiment.

As illustrated in FIG. 8, in step S101, it is determined whether or not the air nozzle position information read command signal has been received. Specifically, the air nozzle overall processing unit 441 performs a process to determine whether or not the air nozzle position information read command signal has been received. In this determination, when it is determined that the air nozzle position information read command signal has been received (S101: Yes), the air nozzle overall processing unit 441 transmits the signal to the air nozzle position information processing unit 443 and makes the process flow proceed to step S102. On the other hand, when it is determined that the air nozzle position information read command signal has not been received (S101: No), the air nozzle overall processing unit 441 makes the process flow proceed to step S103.

In step S102, the air nozzle position information is read out. Specifically, the air nozzle position information processing unit 443 reads out one air nozzle position information AJ stored in the air nozzle position information storage unit 444. Then, the air nozzle overall processing unit 441 makes the process flow proceed to step S103.

In step S103, it is determined whether or not air nozzle position information has been input or edited. Specifically, the air nozzle overall processing unit 441 performs a process to determine whether or not the air nozzle position information AJ has been input or edited by the user. In this determination, when it is determined that the air nozzle position information AJ has been input or edited (S103: Yes), the air nozzle overall processing unit 441 makes the process flow proceed to step S104. On the other hand, when it is determined that the air nozzle position information AJ has not been input or edited (S103: No), the air nozzle overall processing unit 441 makes the process flow to proceed to step S105.

In step S104, the air nozzle position information is set. Specifically, the air nozzle position information processing unit 443 performs a process to set the air nozzle position information AJ based on the read or input air nozzle position information AJ. When the air nozzle position information AJ has been edited, the air nozzle position information processing unit 443 performs a process to set the air nozzle position information AJ on which the edited contents are reflected. After the process of step S104 is performed, the air nozzle overall processing unit 441 makes the process flow proceed to step S105.

In step S105, it is determined whether or not the air nozzle movement control start signal has been received. Specifically, the air nozzle overall processing unit 441 performs a process to determine whether or not the air nozzle movement control start signal has been received by the user input or by the input from the apparatus control unit 83. In this determination, when it is determined that the air nozzle movement control start signal has been received (S105: Yes), the air nozzle overall processing unit 441 transmits the signal to the air nozzle movement control unit 442 and makes the process flow proceed to step S107. On the other hand, when it is determined that the air nozzle movement control start signal has not been received (S105: No), the air nozzle overall processing unit 441 makes the process flow proceed to step S106.

In step S106, it is determined whether or not the air nozzle movement control signal has been received. Specifically, the air nozzle overall processing unit 441 performs a process to determine whether or not the air nozzle movement control signal based on the input from the user has been received. As described above, the air nozzle movement control signal is a signal that commands a certain amount of movement in at least one of the height direction, the horizontal direction, and the rotation direction. In this determination, when it is determined that the air nozzle movement control signal has been received (S106: Yes), the air nozzle overall processing unit 441 transmits the signal to the air nozzle movement control unit 442 and makes the process flow proceed to step S107. On the other hand, when it is determined that the air nozzle movement control signal has not been received (S106: No), the air nozzle overall processing unit 441 makes the process flow proceed to step S108.

In step S107, the movement of the air nozzle is controlled. Specifically, the air nozzle movement control unit 442 performs a process to control at least one of the position and the orientation of the air nozzle based on the received air nozzle position information AJ or air nozzle movement control signal. For example, when the air nozzle movement control unit 442 receives the set air nozzle position information AJ, it controls a movement mechanism drive unit of the air nozzle 413 such that the position and the orientation of the air nozzle 413 become the position and the orientation indicated by the air nozzle position information. Also, for example, when the air nozzle movement control unit 442 receives the air nozzle movement control signal, it controls the movement mechanism drive unit of the air nozzle 413 such that the air nozzle 413 moves by a certain amount in the direction indicated by the signal. When the movement control of the air nozzle 413 is completed, the air nozzle overall processing unit 441 makes the process flow proceed to step S108.

In step S108, it is determined whether or not the air nozzle position storage command signal has been received. Specifically, the air nozzle overall processing unit 441 performs a process to determine whether or not the air nozzle position storage command signal based on the input by the user or the input from the apparatus control unit 83 has been received. In this determination, when it is determined that the air nozzle position storage command signal has been received, the air nozzle overall processing unit 441 makes the process flow proceed to step S109. On the other hand, when it is determined that the air nozzle position storage command signal has not been received, the air nozzle overall processing unit 441 makes the process flow proceed to step S111.

In step S109, the air nozzle position information AJ is acquired. Specifically, the air nozzle position information processing unit 443 performs a process to acquire the air nozzle position information AJ at the current time based on the information obtained from the movement mechanism drive unit of the air nozzle, the air nozzle position information AJ used when controlling the movement of the air nozzle, and the like. When the acquisition of the air nozzle position information AJ is completed, the air nozzle overall processing unit 441 makes the process flow proceed to step S110.

In step S110, the air nozzle position information is stored. Specifically, the air nozzle position information processing unit 443 performs a process to store the air nozzle position information AJ acquired in step S109 in the air nozzle position information storage unit 444. When the storage of the air nozzle position information AJ is completed, the air nozzle overall processing unit 441 makes the process flow proceed to step S111.

In step S111, it is determined whether or not the control process of the air nozzle is terminated. Specifically, the air nozzle overall processing unit 441 performs a process to determine whether or not the air nozzle control process is terminated based on whether or not a control continuation inappropriate signal has been received. The control continuation inappropriate signal is, for example, an error signal indicating that an error has occurred in the control process of the air nozzle or a control process termination signal that commands the termination of the control process of the air nozzle. The control process termination signal is received based on, for example, the input by the user or the input from the apparatus control unit 83.

When it is determined in step S111 that the control process of the air nozzle is to be terminated (step S111: Yes), the air nozzle overall processing unit 441 terminates the control process. On the other hand, when it is determined that the control process of the air nozzle is to be continued (step S111: No), the air nozzle overall processing unit 441 makes the process flow proceed to step S101.

Note that the air nozzle position information storage unit 444 may store air nozzle position information (maintenance retraction position) for the case where the air nozzle is to be retracted during maintenance. In this case, the air nozzle position information processing unit 443 sets the position of the air nozzle to the maintenance retraction position in response to the input of a signal corresponding to the maintenance mode.

### <Effects of first embodiment>

With the resin molding system 1 according to the first embodiment described above, the appropriate operating conditions of the resin molding system can be set more stably.

For example, according to the first embodiment, the air nozzle position information indicating the position and the orientation of the air nozzle can be stored and set by reading out the stored air nozzle position information. Therefore, even when maintenance or a change in the type of resin to be manufactured is performed after the alignment of the air nozzle is completed and the position and the orientation of the air nozzle are changed, the position and the orientation of the air nozzle can be easily returned to the original position and orientation. As a result, the position and the orientation of the air nozzle can be quickly returned to the appropriate position and orientation without relying on the skill of the user.

Furthermore, according to the first embodiment, the movement and the change of orientation of the air nozzle are performed by controlling the device including the motor and movement mechanism, so the position and the orientation of the air nozzle can be controlled with high accuracy and high resolution, making it easier to align the air nozzle.

Hereinafter, various modifications of the first embodiment will be described.

### <First modification>

The first modification is an example in which the air nozzle position information is stored in association with other information such as environmental temperature and environmental humidity.

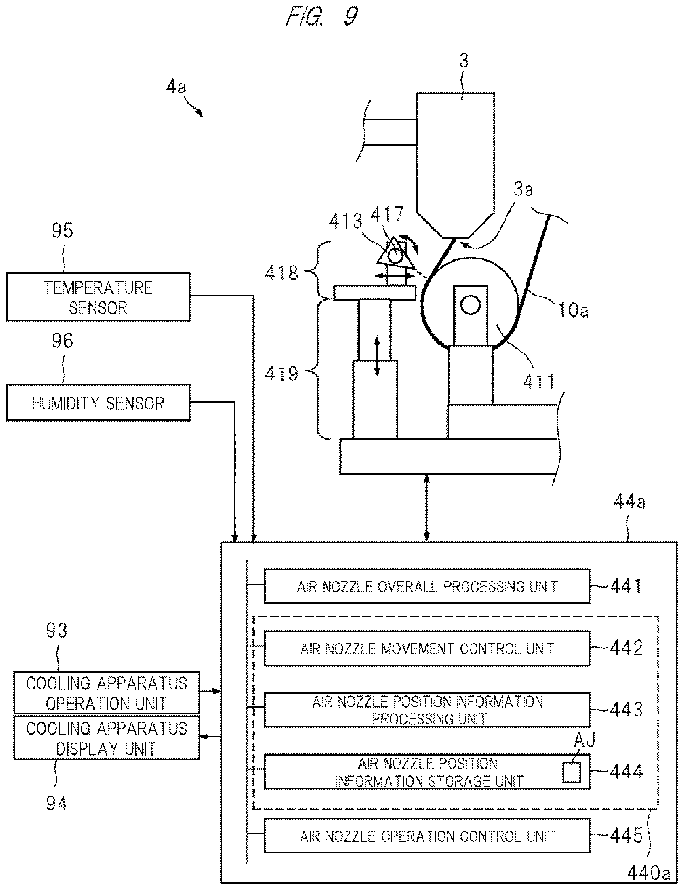

FIG. 9 is a diagram illustrating a configuration example of a main part of a cooling apparatus 4a according to the first modification of the first embodiment. As illustrated in FIG. 9, an air nozzle control unit 44a according to the first modification has the configuration as that of the air nozzle control unit 44 described above. That is, the air nozzle control unit 44a includes the air nozzle overall processing unit 441, the air nozzle movement control unit 442, the air nozzle position information processing unit 443, the air nozzle position information storage unit 444, and the air nozzle operation control unit 445 as functional blocks.

Also, an air nozzle position control device 440a according to the first modification is a device that includes the air nozzle movement control unit 442, the air nozzle position information processing unit 443, and the air nozzle position information storage unit 444 as components. The air nozzle position control device 440a is an example of the air nozzle position control device disclosed in this application.

A temperature sensor 95 and a humidity sensor 96 provided in the facility where the resin molding system is installed are electrically connected to the air nozzle control unit 44a. Note that the temperature sensor 95 and the humidity sensor 96 may be electrically connected to the system computer 8 or the like, and the air nozzle control unit 44a may be connected via the system computer 8.

When the air nozzle position information processing unit 443 stores the air nozzle position information AJ in the air nozzle position information storage unit 444, it acquires a temperature signal output from the temperature sensor 95 and a humidity signal output from the humidity sensor 96. Then, the air nozzle position information processing unit 443 specifies the environmental temperature based on the acquired temperature signal, and specifies the environmental humidity based on the acquired humidity signal. The air nozzle position information processing unit 443 stores the air nozzle position information AJ in association with the specified environmental temperature and environmental humidity.

In addition, when the air nozzle position information processing unit 443 stores the air nozzle position information AJ in the air nozzle position information storage unit 444, it may store the air nozzle position information AJ in association with film type information indicating the type of film to be manufactured in the air nozzle position information storage unit 444. The film type information may be directly input by the user operating the operation unit, or may be selected by the user operating the operation unit from among a plurality of film types registered in advance.

In addition, when the air nozzle position information processing unit 443 stores the air nozzle position information AJ in the air nozzle position information storage unit 444, it may store the air nozzle position information AJ in association with information identifying the adjuster, information indicating the date and time of storage, notes, and others.

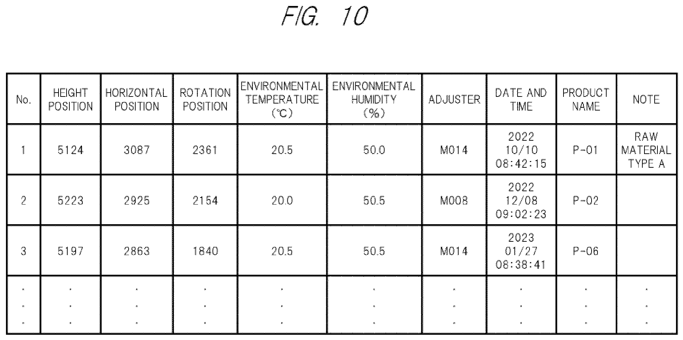

FIG. 10 is a table illustrating an example of information stored in the air nozzle position information storage unit 444 according to the first modification of the first embodiment. As illustrated in FIG. 10, the air nozzle position information AJ includes the height position, horizontal position, and rotation position of the air nozzle 413. The height position is, for example, a data value corresponding to the position of the movable part of the electric actuator that constitutes the air nozzle lifting device 419. Similarly, the horizontal position is, for example, a data value corresponding to the position of the movable part of the electric actuator that constitutes the air nozzle horizontal movement device 418. Furthermore, the rotation position is, for example, a data value corresponding to the rotation position of the movable part of the electric actuator that constitutes the air nozzle rotating device 417.

In addition, the information associated with the air nozzle position information AJ is, as illustrated in FIG. 10, information indicating, for example, the environmental temperature, the environmental humidity, the adjuster's ID number, the date and time of storage, the product name or model number of the film to be manufactured, and notes.

According to the first modification above, the air nozzle position information AJ is stored in association with the type of film to be manufactured. Therefore, when switching the film to be manufactured, the position and the orientation of the air nozzle suitable for manufacturing that film can be easily restored or reproduced from the previously stored air nozzle position information.

In addition, when the air nozzle position information is stored in association with the adjuster of the air nozzle position, it is possible to ask the adjuster how the position and the orientation of the air nozzle were adjusted when the user wishes to know it later.

In addition, when the air nozzle position information AJ is stored in association with the environmental temperature or environmental humidity, the position and the orientation of the air nozzle under the environmental temperature or environmental humidity similar to the current conditions can be reproduced, and the air nozzle can be aligned based on the position and the orientation.

In addition, when the air nozzle position information AJ is stored in association with notes, it is possible to refer to information that is helpful for aligning the air nozzle, such as memos or notes of caution written by the adjuster.

### <Second modification>

The second modification is an example in which air nozzle position information is stored in a storage unit of a shared server connected such that a plurality of resin molding systems can communicate.

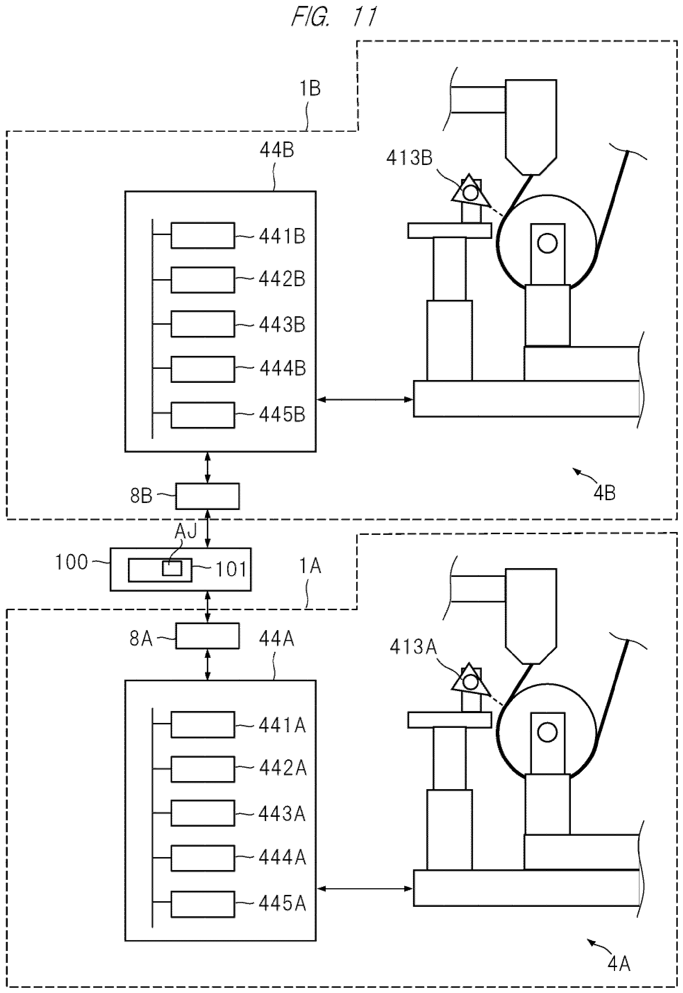

FIG. 11 is a diagram illustrating an example of a connection configuration of a plurality of resin molding systems and a server according to the second modification of the first embodiment. As illustrated in FIG. 11, the second modification includes a resin molding system 1A and a resin molding system 1B, each of which is connected to a shared server 100 so as to be able to communicate with the server 100. Note that the second modification is an example in which two resin molding systems 1A and 1B are connected to the server 100, but three or more resin molding systems may be connected to the server 100.

As illustrated in FIG. 11, the resin molding system 1A according to the second modification includes a system computer 8A, a cooling apparatus 4A, and an air nozzle control unit 44A. Also, the resin molding system 1B according to the second modification includes a system computer 8B, a cooling apparatus 4B, and an air nozzle control unit 44B.

As illustrated in FIG. 11, the air nozzle control units 44A and 44B according to the second modification have the same configuration as that of the air nozzle control unit 44 described above. That is, the air nozzle control unit 44A includes an air nozzle overall processing unit 441A, an air nozzle movement control unit 442A, an air nozzle position information processing unit 443A, an air nozzle position information storage unit 444A, and an air nozzle operation control unit 445A as functional blocks. Similarly, the air nozzle control unit 44B includes an air nozzle overall processing unit 441B, an air nozzle movement control unit 442B, an air nozzle position information processing unit 443B, an air nozzle position information storage unit 444B, and an air nozzle operation control unit 445B as functional blocks.

When storing the air nozzle position information AJ, the air nozzle position information processing unit 443A in the resin molding system 1A stores the air nozzle position information AJ in a server storage unit 101 in the server 100 via the system computer 8A. When storing the air nozzle position information AJ in the server storage unit 101, the air nozzle position information processing unit 443A in the resin molding system 1A may also store the air nozzle position information AJ in the air nozzle position information storage unit 444A in the resin molding system 1A.

When setting the position and the orientation of an air nozzle 413A, the air nozzle movement control unit 442A in the resin molding system 1A reads out the air nozzle position information AJ from the server storage unit 101 via the system computer 8A. Then, the air nozzle movement control unit 442A in the resin molding system 1A sets the position and the orientation of the air nozzle 413A based on the read air nozzle position information AJ.

In addition, when setting the position and the orientation of an air nozzle 413B, the air nozzle position information processing unit 443B in the resin molding system 1B may read out the air nozzle position information AJ stored in the server storage unit 101 included in the server 100 via the system computer 8B. In this case, the air nozzle position information processing unit 443B and the air nozzle movement control unit 442B control the position and the orientation of the air nozzle 413B based on the read air nozzle position information AJ.

According to the second modification above, the air nozzle position information AJ is stored in the server storage unit 101, so the air nozzle position information AJ can be shared between the plurality of resin molding systems 1A and 1B.

Therefore, the position and the orientation of the air nozzle 413A that have been set in one resin molding system 1A can be reproduced in the air nozzle 413B of another resin molding system 1B. In other words, the position and the orientation of the air nozzle 413A properly set in one resin molding system 1A can be copied and applied to the air nozzle 413B in another resin molding system 1B. As a result, when the same type of film is manufactured in a plurality of resin molding systems 1, it is no longer necessary to align the air nozzle 413 for each system, and the alignment can be performed efficiently.

Furthermore, according to the second modification above, even if further alignment of the air nozzle 413 becomes necessary due to individual differences in the resin molding system 1 in which the position and the orientation of the air nozzle 413 have been copied, it only takes minor adjustments.

### <Third modification>

The third modification is an example in which a plurality of resin molding systems is connected so as to be able to communicate with each other, and the air nozzle position information acquired in one resin molding system is transmitted to another resin molding system and used therein.

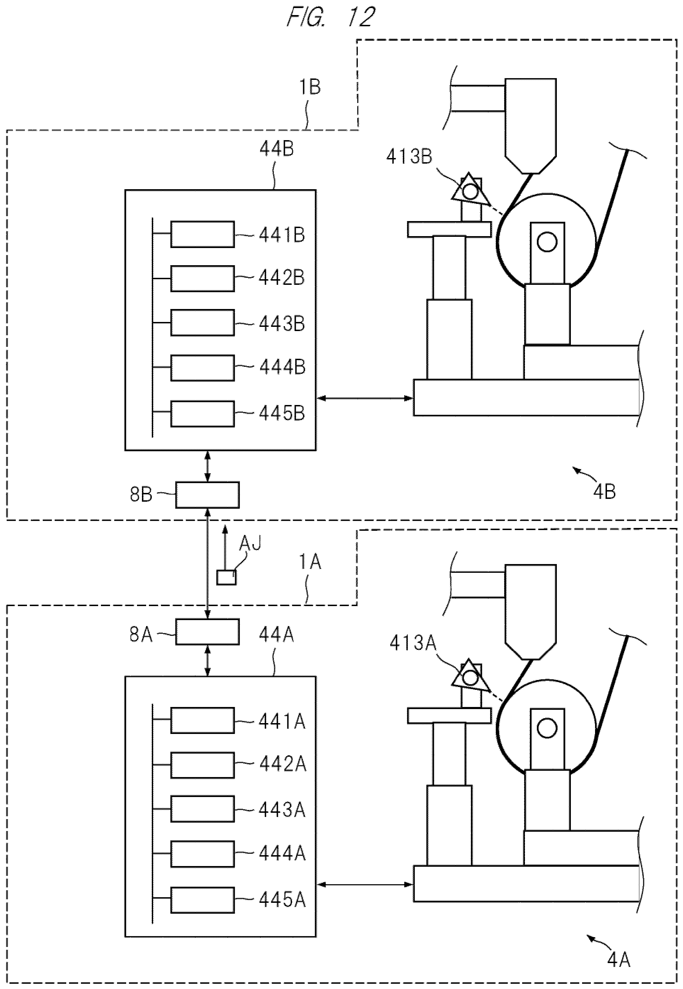

FIG. 12 is a diagram illustrating an example of a connection configuration of a plurality of resin molding systems according to the third modification of the first embodiment. As illustrated in FIG. 12, the plurality of resin molding systems 1A and 1B according to the third modification has the same configuration as those of the resin molding systems 1A and 1B according to the second modification.

Further, as illustrated in FIG. 12, the resin molding system 1A and the resin molding system 1B are connected so as to be able to communicate with each other. The air nozzle position information processing unit 443A in the resin molding system 1A transmits the air nozzle position information AJ stored in the air nozzle position information storage unit 444A to another resin molding system 1B via the system computer 8A. The air nozzle position information processing unit 443B in the resin molding system 1B receives the air nozzle position information AJ transmitted from the resin molding system 1A via the system computer 8B.

Note that the air nozzle position information AJ may be transmitted via a server, or may be transmitted directly without passing through a server. Also, the air nozzle position information AJ may be transmitted directly from the air nozzle position information processing unit 443A to the air nozzle position information processing unit 443B without passing through the system computer.

According to the third modification above, the air nozzle position information AJ is transmitted from one resin molding system 1A to another resin molding system 1B, so it is possible to achieve the same effect as that of the second modification. For example, the position and the orientation of the air nozzle 413A set in one resin molding system 1A can be reproduced in the air nozzle 413B of another resin molding system 1B.

### <Fourth modification>

The fourth modification is an example in which the air nozzle position information acquired in one resin molding system is transferred via a storage medium to another resin molding system and used therein.

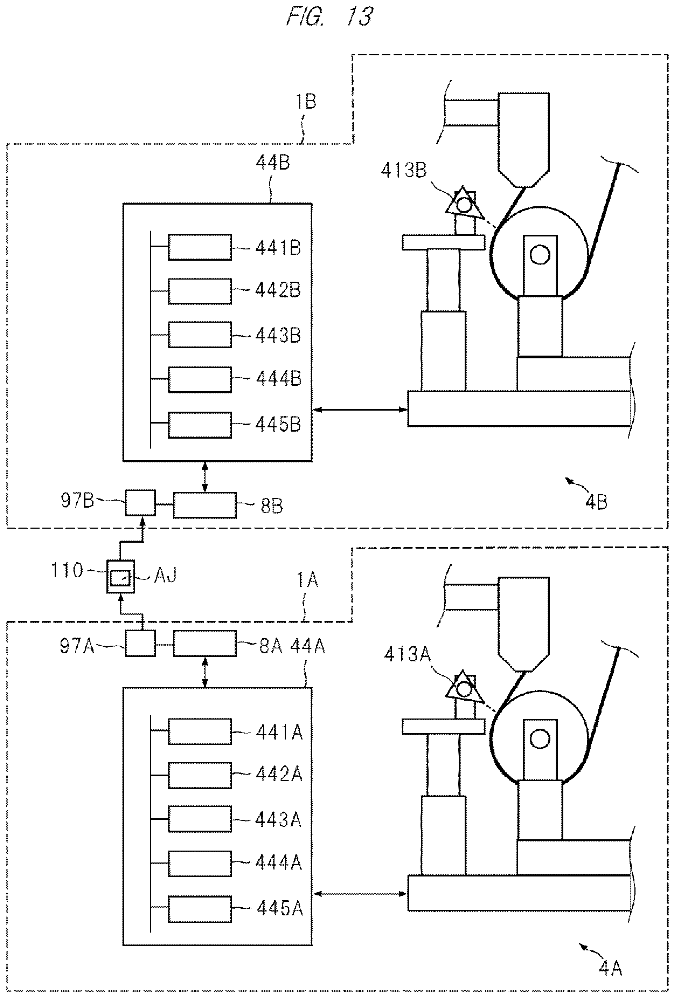

FIG. 13 is a diagram illustrating an example of a plurality of resin molding systems and a storage medium according to the fourth modification of the first embodiment. As illustrated in FIG. 13, the plurality of resin molding systems 1A and 1B according to the fourth modification basically has the same configuration as those of the resin molding systems 1A and 1B according to the second modification. Meanwhile, the resin molding system 1A has a media drive 97A that reads and writes data from and to a transportable recording medium, that is, a recording medium 110. Similarly, another resin molding system 1B has a media drive 97B.

The air nozzle position information processing unit 443A controls the media drive 97A such that the air nozzle position information AJ is written to the recording medium 110 set in the media drive 97A. The user sets the recording medium 110 to which the air nozzle position information AJ has been written in the media drive 97B of another resin molding system 1B. The air nozzle position information processing unit 443B controls the media drive 97B to read out the air nozzle position information AJ from the recording medium 110 and set it as the air nozzle position information of the air nozzle 413B. The air nozzle position information processing unit 443B may store the read air nozzle position information AJ in the air nozzle position information storage unit 444B.

Note that examples of the recording medium 110 include a USB memory, an SD card, a micro SD card, an external hard disk, an external SSD, a CD-ROM, a DVD-ROM, an MO disk, a Blu-ray disk, and a floppy disk. In addition, when the recording medium is of a type that is used by connecting it to a USB port, the USB port corresponds to the media drives 97A and 97B.

According to the fourth modification above, the air nozzle position information AJ is transferred from one resin molding system 1A to another resin molding system 1B via the recording medium 110, so it is possible to achieve the same effect as that of the second modification. For example, the position and the orientation of the air nozzle 413A set in one resin molding system 1A can be reproduced in the air nozzle 413B of another resin molding system 1B.

### <Fifth modification>

The fifth modification is an example in which the air nozzle position information is automatically stored when a prescribed time has elapsed after the completion of the movement control of air nozzle.

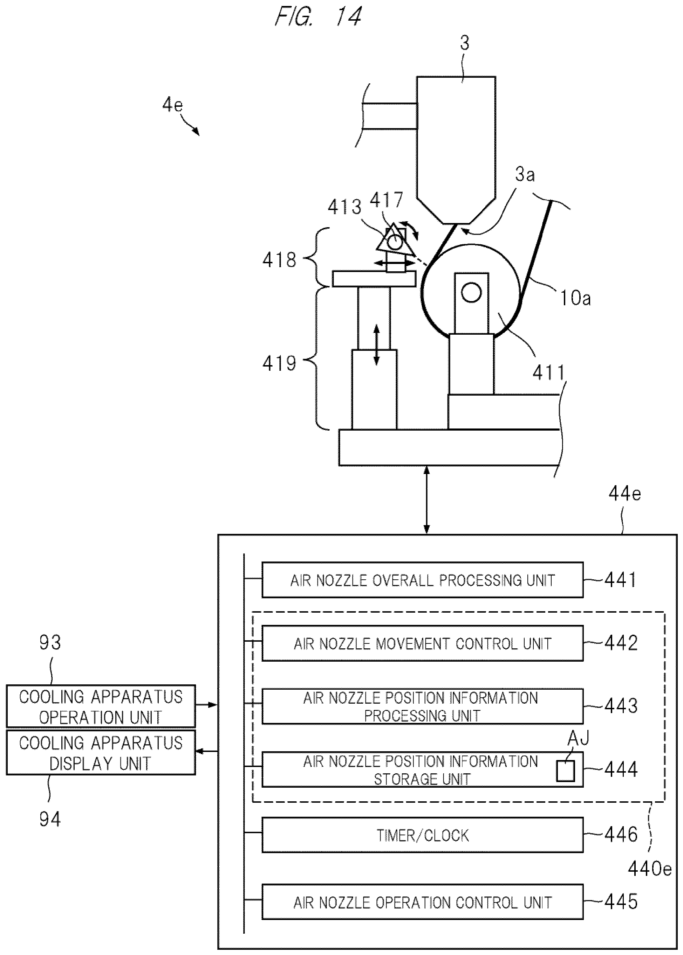

FIG. 14 is a diagram illustrating a configuration example of a main part of a cooling apparatus 4e according to the fifth modification of the first embodiment. As illustrated in FIG. 14, an air nozzle control unit 44e according to the fifth modification includes a timer/clock 446 in addition to the same configuration as that of the air nozzle control unit 44 described above.

Also, an air nozzle position control device 440e according to the fifth modification is a device that includes the air nozzle movement control unit 442, the air nozzle position information processing unit 443, and the air nozzle position information storage unit 444 as components. The air nozzle position control device 440e is an example of the air nozzle position control device disclosed in this application.

The air nozzle movement control unit 442 measures the elapsed time after the movement control of the air nozzle 413 has once been completed using the function of the timer/clock 446, and determines whether or not the measured elapsed time has reached a prescribed time.

When it is determined that the measured elapsed time has reached the prescribed time, the air nozzle movement control unit 442 stores the air nozzle position information AJ, which indicates the position and the orientation of the air nozzle 413 at that time, in the air nozzle position information storage unit 444. When it is determined that the measured elapsed time has not reached the prescribed time, the air nozzle movement control unit 442 does not store the air nozzle position information AJ in the air nozzle position information storage unit 444. Further, if the next movement control is started before the elapsed time after the movement control of the air nozzle 413 has once been completed reaches the prescribed time, the air nozzle movement control unit 442 resets the measured elapsed time to zero.

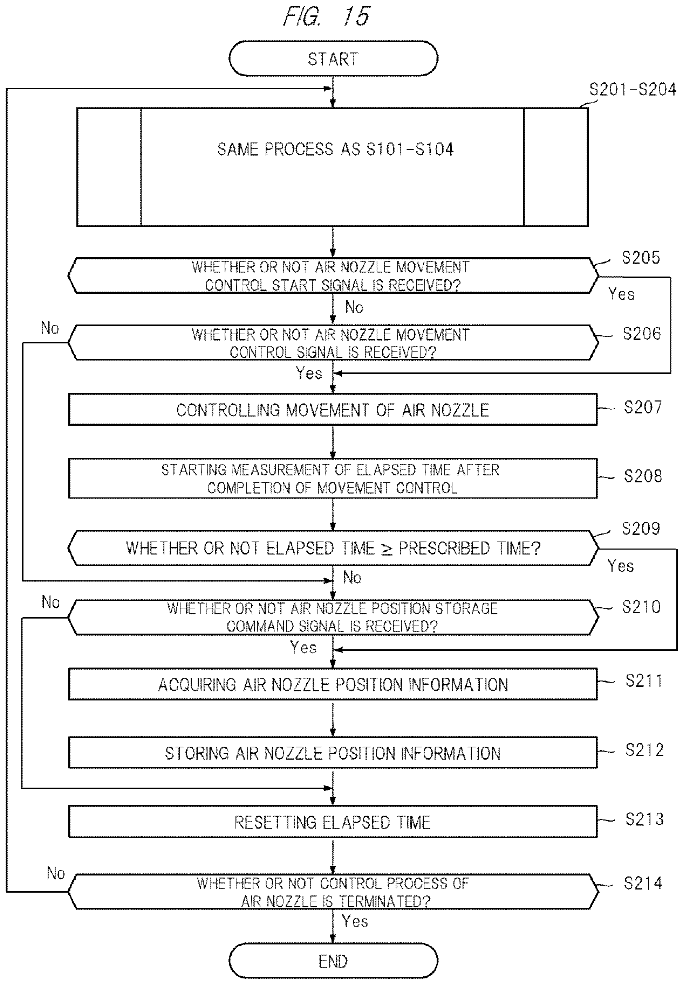

FIG. 15 is a process flow diagram illustrating an example of a process flow in the air nozzle control unit 44 according to the fifth modification of the first embodiment. The process of steps S201 to S204 illustrated in FIG. 15 is similar to the process of steps S101 to S104 illustrated in FIG. 8, so the description thereof will be omitted here.

In step S205, it is determined whether or not the air nozzle movement control start signal has been received. When the determination is affirmative (S205: Yes), the process flow proceeds to step S207. On the other hand, when the determination is negative (S205: No), the process flow proceeds to step S206.

In step S206, it is determined whether or not the air nozzle movement control signal has been received. When the determination is affirmative (S206: Yes), the process flow proceeds to step S207. On the other hand, when the determination is negative (S206: No), the process flow proceeds to step S210.

In step S207, the movement of the air nozzle is controlled. Thereafter, the process flow proceeds to step S208.

In step S208, measurement of the elapsed time after the completion of movement control is started. Specifically, the air nozzle position information processing unit 443 performs a process to start the measurement of the elapsed time after the control related to at least one of the position and the orientation of the air nozzle 413 has been completed using the function of the timer/clock 446. Thereafter, the process flow proceeds to step S209.

In step S209, it is determined whether or not the measured elapsed time has reached a prescribed time. Specifically, the air nozzle position information processing unit 443 performs a process to determine whether or not the measured elapsed time has reached the prescribed time. When the determination is affirmative (S209: Yes), the process flow proceeds to step S211. On the other hand, when the determination is negative (S209: No), the process flow proceeds to step S210.

In step S210, it is determined whether or not the air nozzle position storage command signal has been received. When the determination is affirmative (S210: Yes), the process flow proceeds to step S211. On the other hand, when the determination is negative (S210: No), the process flow proceeds to step S213.

In step S211, the air nozzle position information is acquired. Specifically, the air nozzle position information processing unit 443 performs a process to acquire the air nozzle position information AJ indicating the position and the orientation of the air nozzle 413 at the current time. Thereafter, the process flow proceeds to step S212.

In step S212, the air nozzle position information is stored. Thereafter, the process flow proceeds to step S213.

In step S213, the elapsed time is reset. Specifically, the air nozzle position information processing unit 443 performs a process to reset the measured elapsed time to zero. Thereafter, the process flow proceeds to step S214.

In step S214, it is determined whether or not the air nozzle control process is terminated. When the determination is affirmative (S214: Yes), the control process is terminated. On the other hand, when the determination is negative (S214: No), the process flow proceeds to step S201.

Note that, when the air nozzle position information AJ is stored after a prescribed time has elapsed from the completion of movement control of the air nozzle 413, the air nozzle position information AJ may be either overwritten or saved as separate information.

The above-mentioned prescribed time may be a time that is determined in advance, or may be a time that is input by the user operation. The prescribed time may be selectively set from among a plurality of candidates prepared in advance. The prescribed time may be, for example, 10 minutes, 30 minutes, 1 hour, and others.

Note that the function of automatically saving the air nozzle position information AJ can be turned on or off by the user.

According to the fifth modification above, when a certain amount of time has passed after stopping the movement control of the air nozzle 413, the air nozzle position information AJ is automatically saved. Therefore, even if the user forgets performing the operation to store the air nozzle position information AJ, the air nozzle position information AJ is saved. As a result, it is possible to prevent the air nozzle position information from being unsaved. Furthermore, even if the user finds the operation to store the air nozzle position information AJ cumbersome and neglects it, the air nozzle position information is saved. As a result, it is possible for the user to store the air nozzle position information AJ without performing cumbersome operations.

### <Sixth modification>

The sixth modification is an example in which an imaging sensor that images the region near the air nozzle is provided in the cooling apparatus, the image signal output from the imaging sensor is analyzed, and the movement control of the air nozzle is restricted based on the analysis result such that the air nozzle does not come into contact with other members.

The air nozzle, the T-die, and the casting roll are often arranged at positions close to each other. On the other hand, each of these members is delicate and easily damaged. Therefore, the position of the air nozzle must be adjusted carefully such that the members do not come into contact and cause damage to each other.

Therefore, in the cooling apparatus according to the sixth modification, an imaging sensor that images the region near the air outlet of the air nozzle is provided such that the positional relationship between the air nozzle and its surrounding members can be specified. The air nozzle movement control unit acquires and analyzes the image signal output from the imaging sensor, and specifies the positional relationship between the air nozzle and its surrounding members as a result of the analysis. Then, the air nozzle movement control unit restricts the movement range or movement amount of the air nozzle based on the specified positional relationship such that the air nozzle does not come into contact with other members.

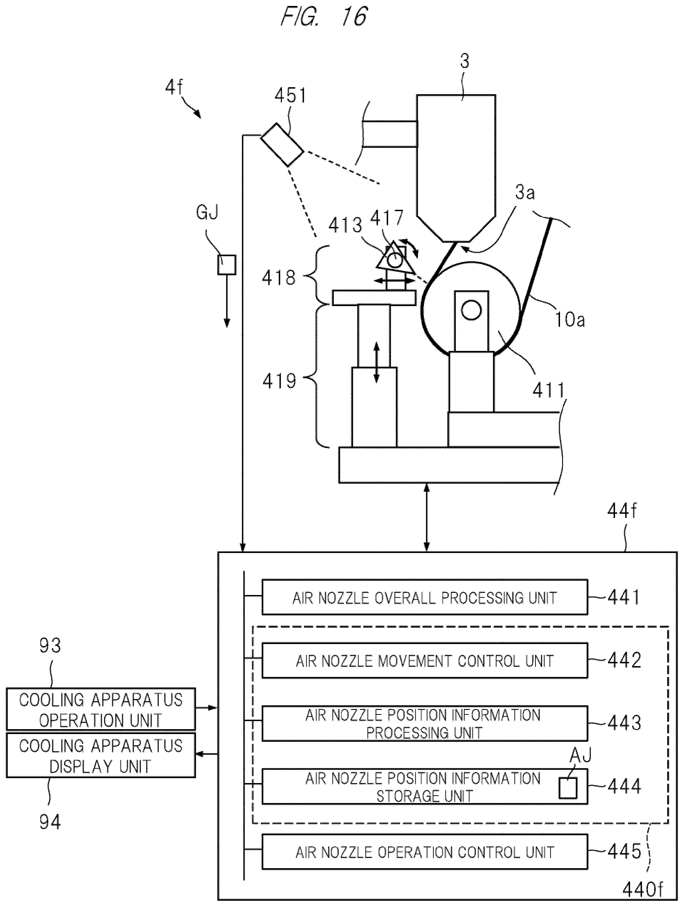

FIG. 16 is a diagram illustrating a configuration example of a main part of a cooling apparatus 4f according to the sixth modification of the first embodiment. As illustrated in FIG. 16, an air nozzle control unit 44f according to the sixth modification has the same configuration as that of the air nozzle control unit 44 described above.

Also, an air nozzle position control device 440f according to the sixth modification is a device that includes the air nozzle movement control unit 442, the air nozzle position information processing unit 443, and the air nozzle position information storage unit 444 as components. The air nozzle position control device 440f is an example of the air nozzle position control device disclosed in this application.

As illustrated in FIG. 16, the cooling apparatus 4f includes an imaging sensor 451 that images the region near the air outlet of the air nozzle 413 such that the positional relationship between the air nozzle 413 and its surrounding members can be specified.

For example, the imaging sensor 451 is directed from the outside of the air nozzle 413 toward the longitudinal direction of the air nozzle 413, and images the region including the space between the air nozzle 413 and its surrounding members continuously and repeatedly multiple times. The imaging sensor 451 outputs an image signal GJ indicating the images obtained by imaging. The air nozzle movement control unit 442 receives and acquires the image signal GJ output from the imaging sensor 451. Note that, in FIG. 16, the imaging sensor 451 is depicted conceptually, and is depicted at a position different from the position where it is actually disposed.

The air nozzle movement control unit 442 analyzes the acquired image signal GJ and specifies the positional relationship between the air nozzle 413 and its surrounding members as a result of the analysis. Then, when controlling the movement of the air nozzle 413, the air nozzle movement control unit 442 sequentially determines whether or not there is a high possibility that the air nozzle 413 comes into contact with its surrounding members, that is, the T-die 3 or the first casting roll 411 based on the specified positional relationship. When it is determined that there is a high possibility of contact, the air nozzle movement control unit 442 stops the movement control of the air nozzle 413.

Alternatively, the air nozzle movement control unit 442 determines the allowable movement range of the air nozzle 413 capable of preventing the air nozzle 413 from coming into contact with its surrounding members based on the specified positional relationship between the air nozzle 413 and its surrounding members. Then, the air nozzle movement control unit 442 imposes restrictions on the movement control of the air nozzle 413 such that the air nozzle 413 moves within the determined allowable movement range.

Alternatively, the air nozzle movement control unit 442 determines, for each movement direction, the allowable movement amount of the air nozzle 413 capable of preventing the air nozzle 413 from coming into contact with its surrounding members based on the specified positional relationship between the air nozzle 413 and its surrounding members. Then, the air nozzle movement control unit 442 imposes restrictions on the movement control of the air nozzle 413 such that the air nozzle 413 moves within the determined allowable movement amount.

Note that examples of the imaging sensor 451 includes a CCD imaging sensor and a CMOS imaging sensor.

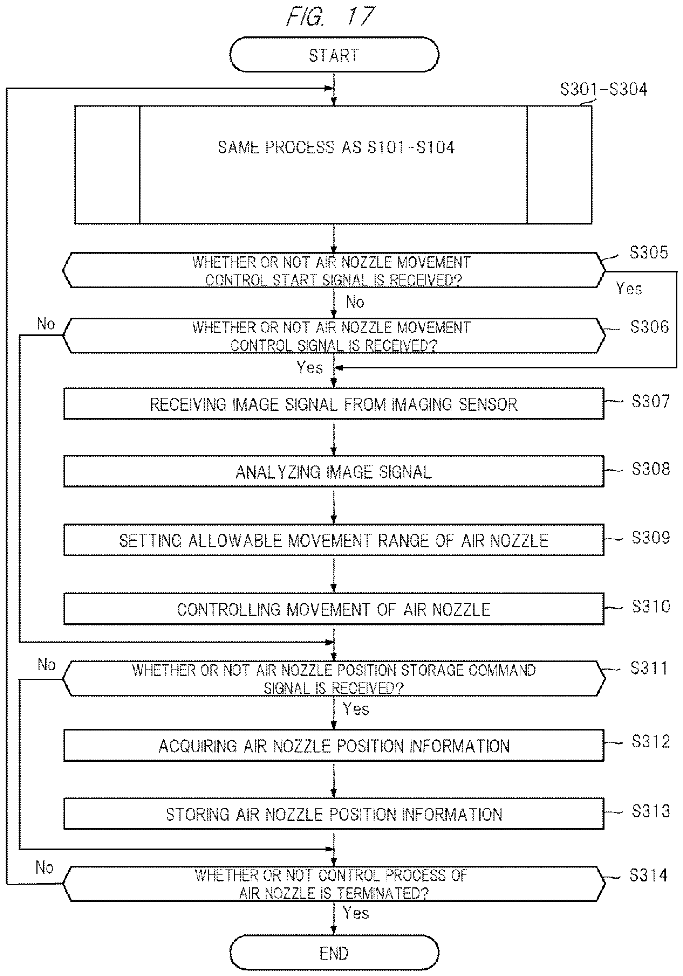

FIG. 17 is a process flow diagram illustrating an example of a process flow in the air nozzle control unit 44f according to the sixth modification of the first embodiment. This process flow is an example in which the air nozzle movement control unit 442 determines the allowable movement amount of the air nozzle 413 capable of preventing the air nozzle 413 from coming into contact with its surrounding members based on the specified positional relationship between the air nozzle 413 and its surrounding members.

The process of steps S301 to S304 illustrated in FIG. 17 is similar to the process of steps S101 to S104 illustrated in FIG. 8, so the description thereof will be omitted here.

In step S305, it is determined whether or not the air nozzle movement control start signal has been received. When the determination is affirmative (S305: Yes), the process flow proceeds to step S307. On the other hand, when the determination is negative (S305: No), the process flow proceeds to step S306.

In step S306, it is determined whether or not the air nozzle movement control signal has been received. When the determination is affirmative (S306: Yes), the process flow proceeds to step S307. On the other hand, When the determination is negative (S306: No), the process flow proceeds to step S311.

In step S307, the image signal from the imaging sensor is received. Specifically, the imaging sensor 451 outputs the image signal GJ obtained by imaging the region near the air outlet of the air nozzle 413. The air nozzle movement control unit 442 performs a process to receive the image signal GJ output from the imaging sensor 451. Thereafter, the process flow proceeds to step S308.

In step S308, the image signal is analyzed. Specifically, the air nozzle movement control unit 442 analyzes the received image signal GJ and specifies the positional relationship between the air nozzle 413 and other members around it as a result of the analysis. Thereafter, the process flow proceeds to step S309.

In step S309, the allowable movement range of the air nozzle is set. Specifically, the air nozzle movement control unit 442 determines and sets the allowable movement range of the air nozzle 413 capable of preventing the air nozzle 413 from coming into contact with other members based on the specified positional relationship. Thereafter, the process flow proceeds to step S310.

In step S310, the movement of the air nozzle is controlled. Thereafter, the process flow proceeds to step S311.

In step S311, it is determined whether or not the air nozzle position storage command signal has been received. When the determination is affirmative (S311: Yes), the process flow proceeds to step S312. On the other hand, when the determination is negative (S311: No), the process flow proceeds to step S314.

In step S312, the air nozzle position information is acquired. Specifically, the air nozzle position information processing unit 443 performs a process to acquire the air nozzle position information AJ indicating the position and the orientation of the air nozzle 413 at the current time. Thereafter, the process flow proceeds to step S313.

In step S313, the air nozzle position information is stored. Thereafter, the process flow proceeds to step S314.

In step S314, it is determined whether or not the air nozzle control process is terminated. When the determination is affirmative (S314: Yes), the control process is terminated. On the other hand, when the determination is negative (S314: No), the process flow proceeds to step S301.

According to the sixth modification above, it is possible to prevent the air nozzle 413 from coming into contact with its surrounding members in advance by the above-described control by the air nozzle movement control unit 442.

### <Seventh modification>

The seventh modification is an example in which the cooling apparatus is provided with a distance sensor that outputs a distance signal corresponding to the distance between the air nozzle and its surrounding members, the distance signal output from the distance sensor is analyzed, and restrictions are imposed on the movement control of the air nozzle based on the analysis result such that the air nozzle does not come into contact with other members.

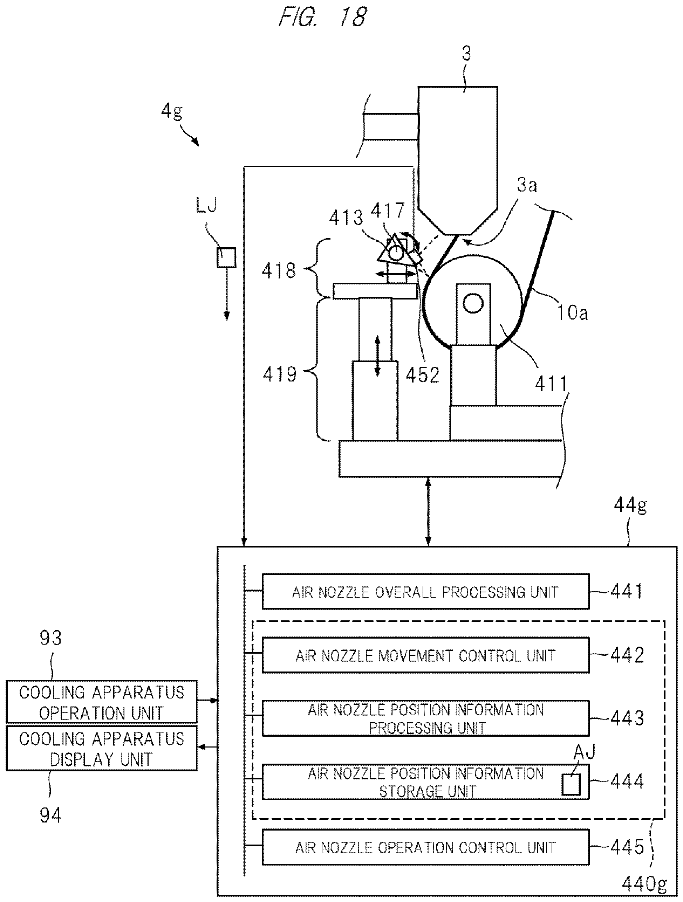

FIG. 18 is a diagram illustrating a configuration example of a main part of a cooling apparatus 4g according to the seventh modification of the first embodiment. As illustrated in FIG. 18, an air nozzle control unit 44g according to the seventh modification has the same configuration as that of the air nozzle control unit 44 described above.

Also, an air nozzle position control device 440g according to the seventh modification is a device that includes the air nozzle movement control unit 442, the air nozzle position information processing unit 443, and the air nozzle position information storage unit 444 as components. The air nozzle position control device 440g is an example of the air nozzle position control device disclosed in this application.

As illustrated in FIG. 18, the cooling apparatus 4g according to the seventh modification includes a distance sensor 452 provided on the air nozzle 413 such that the positional relationship between the air nozzle 413 and its surrounding members can be specified.

The distance sensor 452 outputs a distance signal LJ corresponding to at least one of the distance from the T-die 3 and the distance from the first casting roll 411. The air nozzle movement control unit 442 receives and acquires the distance signal LJ output from the distance sensor 452. Note that, in FIG. 18, the distance sensor 452 is depicted conceptually and is not depicted as being disposed at an optimal position.

The air nozzle movement control unit 442 analyzes the acquired distance signal LJ and specifies the positional relationship between the air nozzle 413 and its surrounding members as a result of the analysis. Then, when controlling the movement of the air nozzle 413, the air nozzle movement control unit 442 sequentially determines whether or not there is a high possibility that the air nozzle 413 comes into contact with its surrounding members, that is, the T-die 3 or the first casting roll 411 based on the specified positional relationship. When it is determined that there is a high possibility of contact, the air nozzle movement control unit 442 stops the movement control of the air nozzle 413.

Alternatively, the air nozzle movement control unit 442 determines the allowable movement range of the air nozzle 413 capable of preventing the air nozzle 413 from coming into contact with its surrounding members based on the specified positional relationship between the air nozzle 413 and its surrounding members. Then, the air nozzle movement control unit 442 imposes restrictions on the movement control of the air nozzle 413 such that the air nozzle 413 moves within the determined allowable movement range.

Alternatively, the air nozzle movement control unit 442 determines, for each movement direction, the allowable movement amount of the air nozzle 413 capable of preventing the air nozzle 413 from coming into contact with its surrounding members based on the specified positional relationship between the air nozzle 413 and its surrounding members. Then, the air nozzle movement control unit 442 imposes restrictions on the movement control of the air nozzle 413 such that the air nozzle 413 moves within the determined allowable movement amount.

Note that examples of the distance sensor 452 include an infrared sensor, an ultrasonic sensor, and a millimeter wave radar sensor.

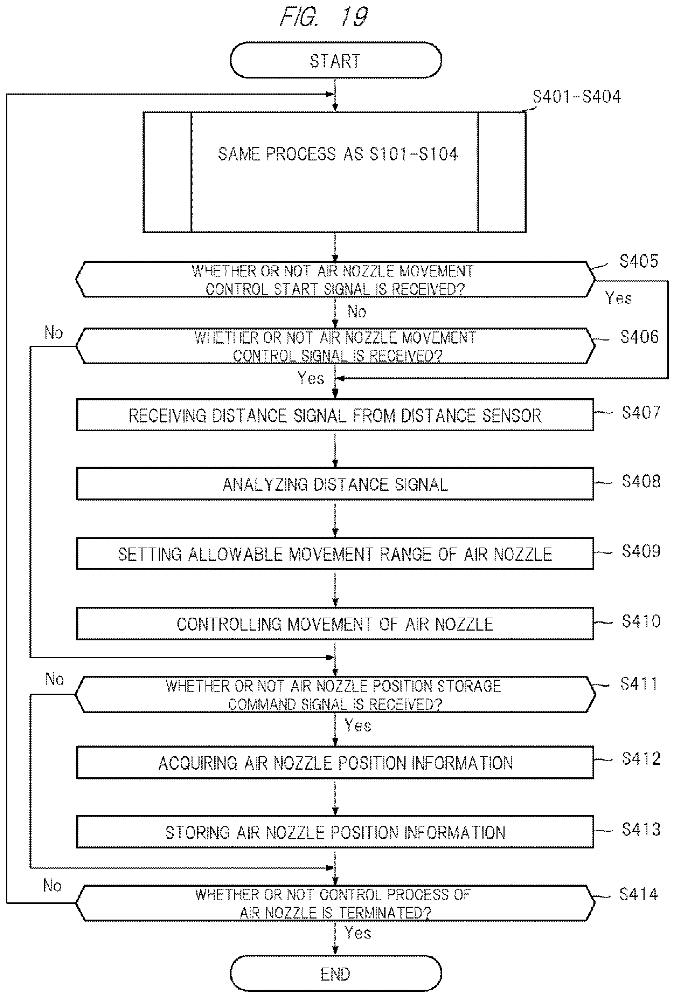

FIG. 19 is a process flow diagram illustrating an example of a process flow in the air nozzle control unit 44g according to the seventh modification of the first embodiment. This process flow is an example in which the air nozzle movement control unit 442 determines the allowable movement amount of the air nozzle 413 capable of preventing the air nozzle 413 from coming into contact with its surrounding members based on the specified positional relationship between the air nozzle 413 and its surrounding members.

Steps S401 to S414 illustrated in FIG. 19 have many process steps in common with steps S301 to S314 illustrated in FIG. 17. Steps different from steps S301 to S314 are steps S407 and S408. Therefore, only steps S407 and S408 will be described here, and descriptions of the other steps will be omitted.

In step S407, a processing signal is received from the distance sensor. Specifically, the distance sensor 452 outputs the distance signal LJ including a distance signal corresponding to the distance between the air outlet of the air nozzle 413 and the T-die 3 or a distance signal corresponding to the distance between the air outlet of the air nozzle 413 and the first casting roll 411. The air nozzle movement control unit 442 performs a process to receive the distance signal LJ output from the distance sensor 452. Thereafter, the process flow proceeds to step S408.

In step S408, the distance signal is analyzed. Specifically, the air nozzle movement control unit 442 analyzes the received distance signal LJ, and specifies the positional relationship between the air nozzle 413 and other members around it as a result of the analysis. Thereafter, the process flow proceeds to step S409.

According to the seventh modification above, it is possible to prevent the air nozzle 413 from coming into contact with its surrounding members in advance by the above-described control by the air nozzle movement control unit 442.

### (Second embodiment)

An air nozzle position control method in the resin molding system 1 described above is one embodiment disclosed in this application. That is, an air nozzle position control method including a step of controlling at least one of the position and the orientation of the air nozzle by the air nozzle movement control unit controlling the movement device configured to change the position and the orientation of the air nozzle based on the air nozzle movement control signal or air nozzle position information indicating the position and the orientation of the air nozzle, a step of storing the air nozzle position information at the current time in the air nozzle position information storage unit by the air nozzle position information processing unit, and a step of reading out the air nozzle position information stored in the air nozzle position information storage unit based on the read command signal and transmitting the air nozzle position information to the air nozzle movement control unit by the air nozzle position information processing unit is one embodiment disclosed in this application.

Alternatively, an air nozzle position control method in which a processor is caused to execute a program, thereby performing a step of controlling at least one of the position and the orientation of the air nozzle by controlling the movement device configured to change the position and the orientation of the air nozzle based on the air nozzle movement control signal or air nozzle position information indicating the position and the orientation of the air nozzle, a step of storing the air nozzle position information at the current time in a memory, and a step of reading out the air nozzle position information stored in the memory based on the read command signal is one embodiment disclosed in this application.

According to the air nozzle position control method of this embodiment, it is possible to achieve the same effect as that of the first embodiment. That is, it is possible to set the appropriate operating conditions of the resin molding system more stably.

### (Third embodiment)

Also, a program that causes a computer to function as each of the functional blocks constituting the air nozzle movement control unit is one embodiment disclosed in this application.

Further, a program that causes a computer to perform a step of controlling at least one of the position and the orientation of the air nozzle by controlling the movement device configured to change the position and the orientation of the air nozzle based on the air nozzle movement control signal or air nozzle position information indicating the position and the orientation of the air nozzle, a step of storing the air nozzle position information at the current time in a memory, and a step of reading out the air nozzle position information stored in the memory based on the read command signal is one embodiment disclosed in this application.

Furthermore, a non-transitory, tangible computer-readable recording medium on which such a program is recorded is also one embodiment disclosed in this application.

According to the program or recording medium of this embodiment, it is possible to achieve the same effect as that of the first embodiment. That is, it is possible to set the appropriate operating conditions of the resin molding system more stably.

In the foregoing, a plurality of embodiments and a plurality of modifications have been described, but the present invention is not limited to the above embodiments and includes various modifications. Also, the above embodiments have been described in detail in order to make the present invention clearly understood, and the present invention is not necessarily limited to those having all of the described configurations. In addition, it is possible to replace a part of the configuration of one embodiment with the configuration of another embodiment, and it is also possible to add the configuration of another embodiment to the configuration of one embodiment. Further, the numerical values, messages, and others contained in the text and figures are merely examples, and the effect of the present invention is not impaired even if different ones are used.

Furthermore, with respect to a part of the configurations of the above embodiments, addition, deletion, and replacement of other configurations are possible. In addition, the above configurations, functions, processing units, processing means, and the like may be implemented by hardware, for example, by designing a part or all of them with integrated circuits. Alternatively, at least one of the above components or functions may be implemented by software, for example, by interpreting and executing a program for realizing the respective functions with a processor such as an MPU or CPU. The scope of functions implemented by software is not limited, and hardware and software may also be used in combination. Information such as programs, tables, and files for realizing the respective functions may be stored in a memory, a storage device such as a hard disk or SSD, or a recording medium such as an IC card, SD card, or DVD.

### REFERENCE SIGNS LIST

1, 1A, 1B...resin molding system
2...extrusion apparatus
3... T-die
4...cooling apparatus
5... longitudinal stretching apparatus
6...transverse stretching apparatus
7...winding apparatus
8, 8A, 8B...system computer
10...raw material
10a, 10b, 10c, 10d, 10e...resin
20...extrusion apparatus computer
40...cooling apparatus computer
43...roll control unit
44, 44a, 44f, 44g...air nozzle control unit
50...longitudinal stretching apparatus computer
60...transverse stretching apparatus computer
70...winding apparatus computer
82...operating condition setting unit
83...apparatus control unit
91...system operation unit
92...system display unit
93...cooling apparatus operation unit
94...cooling apparatus display unit
100...server
101...server storage unit
110...recording medium
401...communication bus
402...processor
403...memory
404...storage
405... program
406...data
407... interface
411...first casting roll
412...second casting roll
413...air nozzle
414...first casting roll lifting device
415...second casting roll lifting device
416...casting roll horizontal movement device
417...air nozzle rotating device
418...air nozzle horizontal movement device
419...air nozzle lifting device
420...support base
421 to 424...conveying roll
441...air nozzle overall processing unit
442...air nozzle movement control unit
443...air nozzle position information processing unit
444...air nozzle position information storage unit
445...air nozzle operation control unit
451...imaging sensor
452...distance sensor
801...communication bus
802...processor
803...memory
804... storage
805...program
806...data
807...interface

## Claims

1. An air nozzle position control device comprising:
an air nozzle movement control unit configured to control at least one of a position and an orientation of an air nozzle included in a cooling apparatus in a resin molding system by controlling a movement device configured to change the position and the orientation of the air nozzle based on an air nozzle movement control signal of the air nozzle or air nozzle position information indicating the position and the orientation of the air nozzle;
an air nozzle position information storage unit; and
an air nozzle position information processing unit configured to perform a process to store the air nozzle position information at a current time in the air nozzle position information storage unit, a process to read out the air nozzle position information stored in the air nozzle position information storage unit based on a read command signal, and a process to transmit the read air nozzle position information to the air nozzle movement control unit.

2. The air nozzle position control device according to claim 1,
wherein the movement device includes a motor and a movement mechanism.

3. The air nozzle position control device according to claim 2,
wherein the air nozzle position information processing unit stores the air nozzle position information in a server storage unit included in a server to which a plurality of resin molding systems is connected.

4. The air nozzle position control device according to claim 2,
wherein the air nozzle position information processing unit transmits the air nozzle position information to another resin molding system different from the resin molding system.

5. The air nozzle position control device according to claim 2,
wherein the air nozzle position information processing unit stores the air nozzle position information in a transportable recording medium.

6. The air nozzle position control device according to claim 2,
wherein the air nozzle position information processing unit stores the air nozzle position information in association with information indicating an environmental temperature and an environmental humidity based on signals output from a temperature sensor and a humidity sensor provided in a facility in which the resin molding system is installed.

7. The air nozzle position control device according to claim 2,
wherein the air nozzle movement control unit restricts movement of the air nozzle based on an analysis result of a signal output from a sensor configured to acquire information indicating a positional relationship between the air nozzle and other members that may come into contact with the air nozzle so as to prevent the air nozzle from coming into contact with the other members.

8. The air nozzle position control device according to claim 7,
wherein the sensor includes an imaging sensor configured to image the air nozzle and the other members.

9. The air nozzle position control device according to claim 7,
wherein the sensor includes a distance sensor configured to acquire information indicating a distance between the air nozzle and the other members.

10. The air nozzle position control device according to claim 2,
wherein the air nozzle position information processing unit stores the air nozzle position information at the current time in the air nozzle position information storage unit when a prescribed time has elapsed after completion of the control of the position or the orientation of the air nozzle.

11. The air nozzle position control device according to claim 2,
wherein the movement mechanism includes:
a rotation mechanism configured to rotate the air nozzle around a rotation axis extending in a longitudinal direction of the air nozzle;
a horizontal movement mechanism configured to support the rotation mechanism and move the rotation mechanism in a horizontal direction perpendicular to the longitudinal direction; and
a lifting mechanism configured to support the horizontal movement mechanism and raise and lower the horizontal movement mechanism.

12. An air nozzle position control method comprising:
a step of controlling at least one of a position and an orientation of an air nozzle by an air nozzle movement control unit controlling a movement device configured to change the position and the orientation of the air nozzle based on an air nozzle movement control signal or air nozzle position information indicating the position and the orientation of the air nozzle;
a step of storing the air nozzle position information at a current time in an air nozzle position information storage unit by an air nozzle position information processing unit; and
a step of reading out the air nozzle position information stored in the air nozzle position information storage unit based on a read command signal and transmitting the air nozzle position information to the air nozzle movement control unit by the air nozzle position information processing unit.

13. The air nozzle position control method according to claim 12,
wherein the air nozzle position information processing unit stores the air nozzle position information in a server storage unit included in a server to which a plurality of resin molding systems is connected.

14. The air nozzle position control method according to claim 12,
wherein, in the step of controlling at least one of the position and the orientation of the air nozzle, the air nozzle movement control unit restricts movement of the air nozzle based on an analysis result of a signal from a sensor configured to acquire information indicating a positional relationship between the air nozzle and other members that may come into contact with the air nozzle so as to prevent the air nozzle from coming into contact with the other members.

15. A resin molding system including the air nozzle position control device according to claim 1.
